# EUROPEAN PATENT APPLICATION

(11) **EP 0 932 028 A1**
(43) Date of publication of application: **28.07.1999**
(21) Application number: 98101028.3
(22) Date of filing: 22.01.1998
(51) Int. Cl.: G01D 5/347, G01D 11/24

(54) **Optical rotation sensing device**

(71) Applicant: Primax Electronics Ltd, Hsi Chih Town, Taipei Hsien (TW)
(72) Inventor: Liu, Shu-Ming, c/o Primax Electronics Ltd., Hsi Chih Town, Taipei Hsien, R.O.C. (TW)
(74) Representative: Bauer, Robert, Dipl.-Ing.

(57) **Abstract**

An optical rotation sensing device (30; 70) comprising a circuit board (32; 72) having an optical sensor (42; 82) installed thereon, capable of producing electrical signals, a rotational module (34; 74) including a circular panel (50; 90) having a plurality of optically detectable position marks (54; 92) around its periphery and an axle (48; 88) at the center of said panel for rotating said module, and mounting means (36, 38; 76, 100) for rotatably mounting said module (34; 74) on said circuit board (32; 72) thus, that the periphery of said panel (50; 90) including said position marks (54; 92) can be scanned by said optical sensor (42; 82) is characterized in that said axle (48; 88) is mounted to extend perpendicularly to said circuit board (32; 72). In this way the space consumed by the sensing device is markedly reduced in comparison with any prior art constructions.

## Description

The present invention relates to an optical rotation sensing device comprising the features of the preamble of claim 1.

In prior art versions of such sensing devices the axle of the rotational module is mounted in parallel to the circuit board, the panel including the position holes being disc-shaped and extending in a plane perpendicular to the circuit board. Accordingly, the sensing device requires relatively much space which, however, may be rare in an electronic device including any such sensing device as, e.g., a computer mouse.

With this problem in mind, the present invention as claimed aims at providing an optical sensing device of the kind as specified in the preamble of claim 1, in which the space required is substantially reduced.

In that, according to the invention, the axle of the rotational module extends perpendicular to the circuit board the space required is considerably reduced in respect to corresponding prior art sensing devices.

In the following the invention is described by way of example with reference to the accompanying drawings, in which
Fig. 1 is a perspective view of a prior art optical rotation sensing device,
Fig. 2 is a side view of an optical rotation sensing device according to the present invention,
Fig. 3 is a perspective view of various components of the sensing device shown in Fig. 2,
Fig. 4 is a longitudinal section of the sensing device shown in Fig. 2,
Fig. 5 is a side view of another optical rotation sensing device according to the present invention,
Fig. 6 is a perspective view of various components of the sensing device shown in Fig. 5, and
Fig. 7 is a longitudinal section of the sensing device shown in Fig. 5.

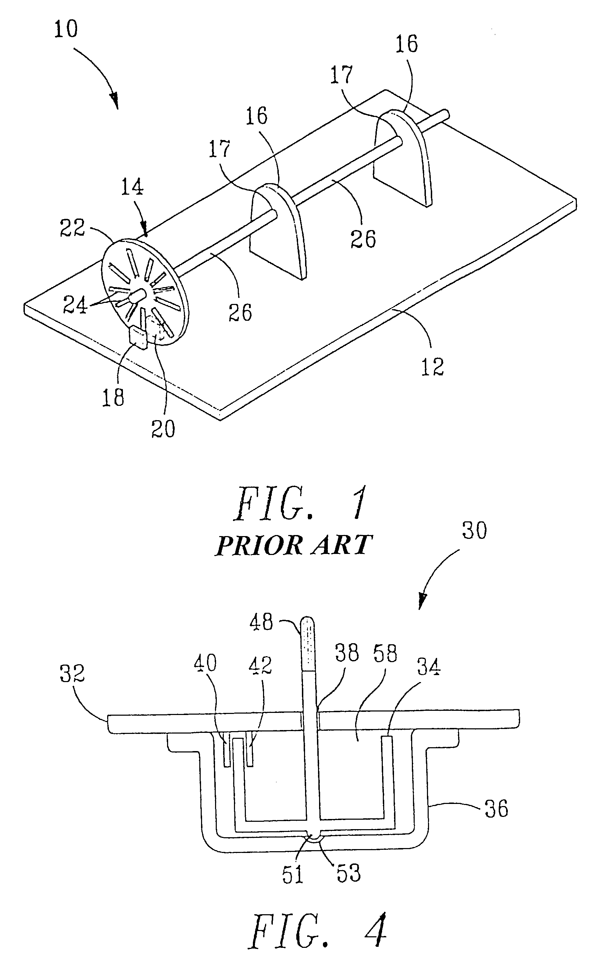

As shown in Fig. 1, a prior art optical rotation sensing device 10 comprises a circuit board 12, a rotational module 14, two mounting arms 16, an LED (light emitting diode) 18, and a sensor 20. The module 14 comprises a disc-shaped circular pannel 22 having a plurality of position holes 24 arranged along its periphery and an axle 26 perpendicularly installed at the center of the panel 22. The two mounting arms 16 are themselves vertically mounted on the circuit board 12 and each comprises a mounting hole 17 near its top end. The axle 26 is rotatably mounted in the two mounting holes 17, in parallel to the circuit board 12, so that the position holes 24 of the circular panel 22 can pass between the LED 18 and the sensor 20 on the circuit board 12. When the axle 26 is rotated, for example by a roller ball within a mouse, the position holes 24 of the panel 22 will pass by the LED 18 and the sensor 20 so that displacement signals are generated by the sensor 20 to measure the rotations of the module 14.

Since the circular panel 22 is in perpendicular relationship with the circuit board 12 it occupies a lot of space inside an electronic device and thus is a serious problem for an electronic device with very limited space.

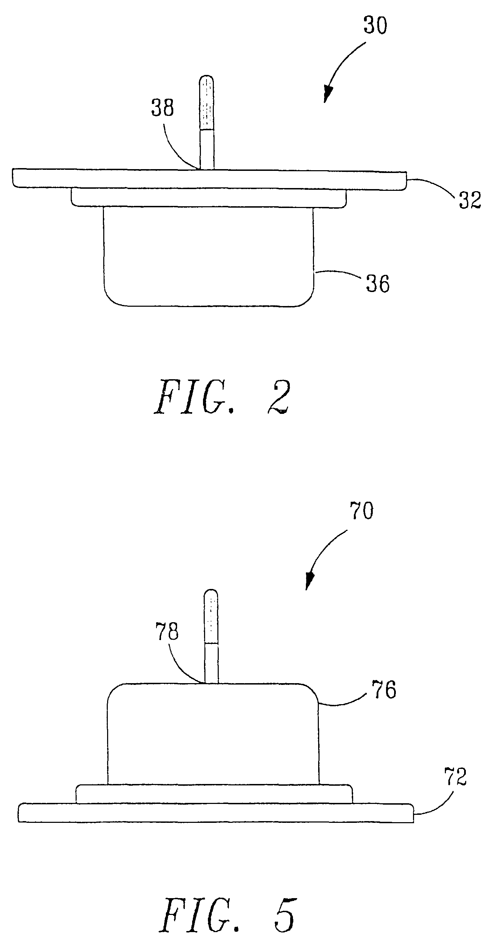

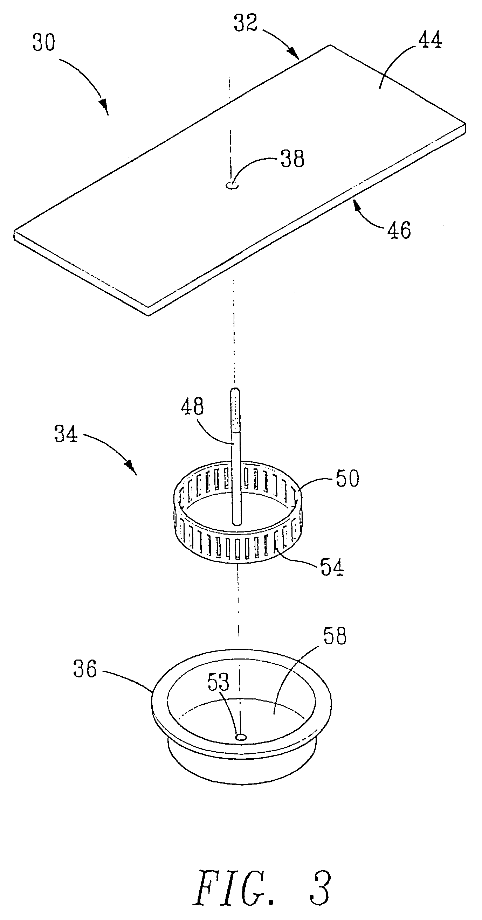

An optical sensing device 30 according to the present invention, as shown in the Figs. 2 - 4, comprises a circuit board 32, a rotational module 34 and a cap-shaped mounting member 36 for mounting the module 34 to the circuit board 32. The circuit board 32 is horizontally positioned in use, as in a mouse, and comprises a top side 44, a bottom side 46, and a through hole 38. The module 34 comprises a cap-shaped circular panel 50 having a plurality of position holes 54 along a cylindrical collar thereof and an axle 48 at its center for rotating the panel 50. The bottom side 46 of the circuit board 32 is equipped with an LED 40 and a sensor 42 for detecting light emitted from the LED 40 that has passed through any of the position holes 54.

The mounting member 36 comprises a circular chamber 58 open to the top for receiving the panel 50 of the module 34, an interior end, 51, of the axle 48 extending into a corresponding central recess 53 in the bottom of the mounting member 36. By use of the mounting member 36 the panel 50 is rotatably mounted on the bottom side 46 of the circuit board 32 with the axle 48 extending perpendicularly to the top side 44 of the circuit board 32 through the through hole 38 so that the panel 50 can be rotated from the top side 44 of the circuit board 32. When the panel 50 is rotated by means of the axle 48, its position holes 54 will pass by the LED 40 and sensor 42 to generate displacement signals so that rotations of the module 34 can be calculated from the displacement signals.

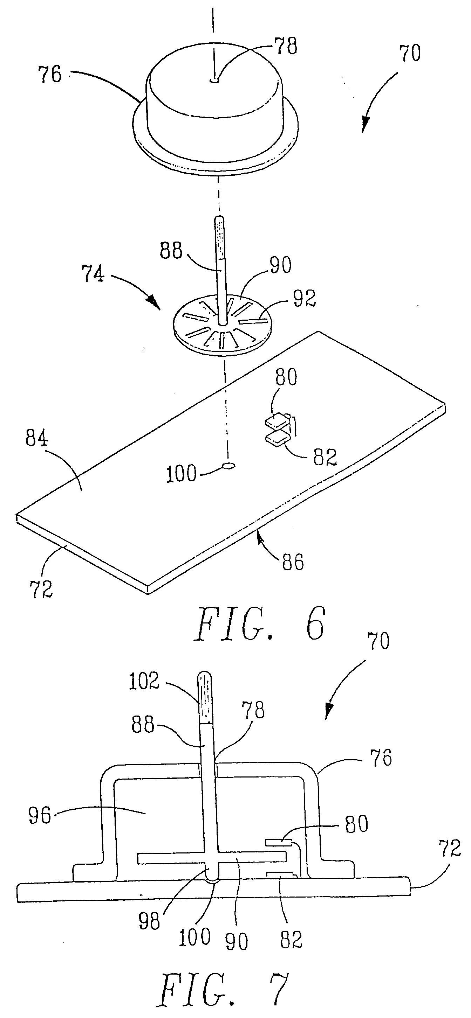

Another optical sensing device 70 according to the invention, as shown in the Figs. 5 - 7, comprises a circuit board 72, a rotational module 74, and a cap-shaped mounting member 76 for mounting the module 74 to the circuit board 72. The circuit board 72, in use, again is horizontally positioned. It comprises a top side 84 and a bottom side 86. The module 74 comprises a disc-shaped circular panel 90 having a plurality of position holes 92 along its periphery, and an axle 88 perpendicularly installed at the center of the panel 90 for rotating it. In this example the top side 84 of the circuit board 72 is equipped with an LED 80 at some distance above the circuit board 72 and a sensor 82 for detecting light emitted from the LED 80 which has passed through any of the position holes 92, the sensor being mounted flat on the circuit board 72.

The mounting member 76 is used for rotatably mounting the module 74 on the circuit board 72 with the axle 88 perpendicular to the circuit board 72 and the circular panel 90 rotatably positioned between the LED 80 and sensor 82. The mounting member 76 comprises a circular chamber 96 open to the bottom and a through hole 78 in its top. The panel 90 is rotatably installed inside the chamber 96 and the mounting means 76 is installed on the top side 84 of the circuit board 72, one end, 98, of the axle 88 extending into a recess 100 in the circuit board 72 and another end, 102, extending through the through hole 78 of the mounting member 76, so that the module 74 can be rotated from the top side 84 of the circuit board 72. When the module 74 is rotated by using the axle 88, the position holes 92 of the panel 90 will pass between the LED 80 and sensor 82 to generate displacement signals so that rotations of the module 74 can be calculated therefrom.

It ought to be observed that, principally, either of the two different rotational modules 34 and 74 previously described can be employed with its circular pannel 50 and 90, respectively, above or below the associated circuit board. Since in each case the axle of the rotational module extends perpendicularly with respect to the circuit board the sensing devices of the present invention can be made very compact and much smaller than a corresponding prior art sensing device as shown, e.g., in Fig. 1.

## Claims

1. An optical rotation sensing device (30; 70) comprising
- a circuit board (32; 72) having an optical sensor (42; 82) installed thereon, capable of producing electrical signals,
- a rotational module (34; 74) including a circular panel (50; 90) having a plurality of optically detectable position marks (54; 92) around its periphery and an axle (48; 88) at the center of said panel for rotating said module,
- and mounting means (36, 38; 76, 100) for rotatably mounting said module (34; 74) on said circuit board (32; 72) thus, that the periphery of said panel (50; 90) including said position marks (54; 92) can be scanned by said optical sensor (42; 82),
**characterized** in that said axle (48; 88) is mounted to extend perpendicularly to said circuit board (32; 72).

2. The optical rotation sensing device (30; 70) of claim 1, wherein said position marks (54; 92) are holes or transparent areas and said optical sensor (42; 82) is associated with a light source (40; 80) positioned to emit light through said position marks.

3. The optical rotation sensing device (30) of claim 1 or 2, wherein said circular panel (50) is cap-shaped, having a collar carrying said position marks (54).

4. The optical rotation sensing device (70) of claim 1 or 2, wherein said circular panel (90) is disc-shaped.

5. The optical rotation sensing device (30) of claim 3 in combination with claim 2, wherein said light source (40) and sensor (42) are both mounted on said circuit board (32).

6. The optical rotation sensing device (70) of claim 4 in combination with claim 2, wherein one of said light source (80) and sensor (82) is mounted on said circuit board (72) whereas the other one is mounted spaced from said circuit board.

7. The optical rotation sensing device (30; 70) of any one of the preceding claims, wherein said mounting means (36, 38) include a through hole (38) in said circuit board (32) through which said axle (48; 88) extends.

8. The optical rotation sensing device (30; 70) of any one of the preceding claims, wherein said mounting means (36, 38; 76, 100) comprise a cap-shaped mounting member (36; 76) installed on said circuit board (32; 72) and including a circular chamber (58; 96) in which said panel (50; 90) is received together with said sensor (42; 82) and, as the case may be, said light source (40; 80).

9. The optical rotation sensing device (30; 70) of claim 8, wherein said mounting member (76) includes a central through hole (78) through which said axle (48; 78) extends.

10. The optical rotation sensing device (30; 70) of claim 8, wherein said mounting member (36) includes a central recess (53) into which said axle (48; 78) extends.
